Europäisches Patentamt

European Patent Office

Office européen des brevets

(19)

(11) Veröffentlichungsnummer: **0 135 096 B1**

(12) **EUROPÄISCHE PATENTSCHRIFT**

(45) Veröffentlichungstag der Patentschrift:
31.01.90

(51) Int. Cl.⁴: **G 11 B 5/147**

(21) Anmeldenummer: **84109251.3**

(22) Anmeldetag: **03.08.84**

(54) **Magnetkopf für ein senkrecht zu magnetisierendes Aufzeichnungsmedium.**

(30) Priorität: **19.08.83 DE 3330041**

(43) Veröffentlichungstag der Anmeldung:
**27.03.85 Patentblatt 85/13**

(45) Bekanntmachung des Hinweises auf die Patenterteilung:
**31.01.90 Patentblatt 90/5**

(84) Benannte Vertragsstaaten:
**DE FR GB IT**

(56) Entgegenhaltungen:
**EP-A- 0 086 952**
**EP-A- 0 100 841**
**DE-A- 2 924 013**
**DE-A- 3 225 780**
**JP-A-57 183 615**
**US-A- 4 277 809**

**IBM Technical Disclosure Bulletin, vol. 26, no. 1, pp. 357-360**
**IEEE TRANSACTIONS ON MAGNETICS, Band 18, Nr. 6, November 1982, H. FUJIWARA "Thin permalloy film - Bulk Ferrite Composite Head for Perpendicular Magnetic Recording", Seiten 1158-1**
**IEEE TRANSACTIONS ON MAGNETICS, Band 17, Nr. 6, November 1981 J. LAZZARI "Thin-film Head Study for Perpendicular Recording" Seiten 3120-3122**
**IEEE TRANSACTIONS ON MANETICS, Band 16, Nr. 1, Jänner 1980 S. IWASAKI "Perpendicular Magnetic Recording" Seiten 71-76**

(73) Patentinhaber: **Siemens Aktiengesellschaft, Wittelsbacherplatz 2, D-8000 München 2 (DE)**

(72) Erfinder: **Diepers, Heinrich, Dr., Velt-Stoss-Strasse 44, D-8522 Höchstadt (DE)**
Erfinder: **Schewe, Herbert, Dr., Haydnstrasse 58, D-8522 Herzogenaurach (DE)**

## Beschreibung

Die Erfindung bezieht sich auf eine Einrichtung zur Speicherung von Informationen gemäß dem gattungsbildenden ersten Teil des Patentanspruchs 1. Eine derartige Einrichtung ist aus der US-A-4 277 809 zu entnehmen.

Das Prinzip einer senkrechten Magnetisierung zur Speicherung von Informationen ist allgemein bekannt (vgl. z.B. «IEEE Transactions on Magnetics», vol. MAG-16, no. 1, Jan. 1980, Seiten 71 bis 76 oder die DE-A-2 924 013). Für dieses Prinzip, das vielfach auch als vertikale Magnetisierung bezeichnet wird, sind besondere Aufzeichnungsmedien wie beispielsweise eine starre Magnetspeicherplatte, eine flexible Einzelplatte (Floppy Disc) oder ein Magnetband erforderlich. Ein solches Aufzeichnungsmedium weist mindestens eine magnetisierbare Speicherschicht vorbestimmter Dicke auf, welche ein magnetisch anisotropes Material, insbesondere aus einer CoCr-Legierung, enthält, dessen Achse leichter Magnetisierung senkrecht zur Oberfläche des Mediums gerichtet ist. Mittels eines besonderen Schreibkopfes werden dann längs einer Spur die einzelnen Informationen in aufeinanderfolgenden Abschnitten, auch Zellen oder Blöcke genannt, durch Magnetisierung der Speicherschicht eingeschrieben. In der Praxis werden im allgemeinen die magnetischen Flußwechsel, d.h. die Übergänge von einer Magnetisierungsrichtung zur entgegengesetzten, als Informationen benutzt. Die Abschnitte haben dabei eine vorbestimmte, auch als Wellenlänge bezeichnete Ausdehnung in Längsrichtung der Spur. Diese Ausdehnung kann im Vergleich zu der bei dem Verfahren einer longitudinalen Speicherung durch die Entmagnetisierung gegebenen Grenze wesentlich kleiner sein, so daß sich nach dem Prinzip der senkrechten Magnetisierung die Informationsdichte in dem Aufzeichnungsmedium vorteilhaft vergrößern läßt.

Bei diesem Prinzip der senkrechten Magnetisierung ergeben sich jedoch Probleme bei der Entwicklung entsprechender Magnetköpfe. Bei diesen Köpfen macht nämlich vor allem die angestrebte Flußführung zu einem möglichst geschlossenen Kreis mit geringem magnetischen Widerstand Schwierigkeiten.

Ein geeigneter Magnetkopf weist im allgemeinen einen sogenannten Hauptpol auf, mit dem ein hinreichend starkes senkrechtes Magnetfeld zum Ummagnetisieren der einzelnen Abschnitte in der Speicherschicht erzeugt wird. Der notwendige magnetische Rückschluß kann dann z.B. durch den Streufluß erfolgen («IEEE Trans. Magn.», vol. MAG-18, no. 6, Nov. 1982, Seiten 1170 bis 1172).

Ferner läßt sich ein Rückschluß auch mit einem sogenannten Hilfspol vornehmen, der z.B. auf der gegenüberliegenden, von dem Hauptpol abgewandten Seite des Aufzeichnungsmediums angeordnet ist (vgl. die genannte Literaturstelle aus «IEEE Trans. Magn.», vol MAG-16).

Gemäß einer weiteren Ausführungsform kann sich der besondere Hilfspol aber auch auf derselben Seite wie der Hauptpol befinden (vgl. «IEEE Trans. Magn.», vol. MAG-17, no. 6, Nov. 1981, Seiten 3120 bis 3122 oder vol. MAG-18, no. 6, Nov. 1982, Seiten 1158 bis 1163 oder die DE-A-2 914 013). Der Hilfspol dient dabei in jedem Falle lediglich nur zur Flußrückführung. Ein eventuelles Mitschreiben des Hilfspols kann in Kauf genommen werden, da ihm der schreibende Hauptpol stets nacheilt und somit vom Hilfspol eventuell geschriebene Informationen überschreibt, sofern die Breite des Hilfspols nicht größer als die des Hauptpols ist und somit bereits beschriebene Nachbarspuren unbeeinflußt bleiben. Bei diesem Magnetkopf sind außerdem der größere Querschnitt des Hilfspols im Vergleich zum Hauptpol und eine verhältnismäßig große Ausdehnung des zwischen den Polen ausgebildeten Luftspaltes erforderlich, um so eine weitgehende Reduzierung der magnetischen Flußdichte am Hilfspol zu gewährleisten. Jedoch kann ein Mitlesen des Hilfspols mit seiner ablaufenden Kante zu Schwierigkeiten bei der Informationserkennung führen.

Diese Schwierigkeiten hinsichtlich eines unerwünschten Mitschreibens oder -lesens können bei dem aus der Veröffentlichung «IBM Technical Disclosure Bulletin», vol. 26, no. 1, Juni 1983, Seiten 357 bis 360 zu entnehmenden Doppelspur-Magnetkopf nicht auftreten. Denn dieser Magnetkopf enthält einen den magnetischen Fluß führenden Leitkörper mit zwei Polschenkeln, die quer zur Führungsrichtung des Kopfes angeordnet sind. Dieser bekannte Magnetkopf beschreibt demnach mit zwei gleichberechtigten Hauptpolen zwei parallel liegende Spuren. Jeder eine Informationseinheit festlegende Abschnitt dieser Doppelspur weist demnach zwei Teilabschnitte auf, die jeweils einem der Hauptpole zuzuordnen sind und entgegengesetzte Polarität haben. Ferner ist bei dem bekannten Magnetkopf zum Auslesen der beschriebenen Informationen ein besonderer Lesekopf vorgesehen, dessen magnetischer Leitkörper entsprechend aufgebaut ist. Der konstruktive Aufwand des bekannten Magnetkopfes ist dementsprechend groß. Außerdem ist auch der Aufwand zur Führung des Magnetkopfes längs zweier parallel liegender Spuren verhältnismäßig hoch.

Demgegenüber weist der aus der eingangs genannten US-A-4 277 809 zu entnehmende Magnetkopf nur einen einzigen magnetischen Leitkörper mit zwei Polschenkeln zum Schreiben und Lesen auf. Diese Polschenkel bilden ebenfalls gleichberechtigte Hauptpole. Ihre Schenkelenden sind in Bewegungsrichtung des Kopfes gesehen hintereinander angeordnet, wobei zwischen ihnen ein sehr enger Luftspalt ausgebildet ist. Mittels einer Ansteuerschaltung wird eine kombinierte Schreib-/Lesespulenwicklung beim Schreiben der Informationen derart erregt, daß an den beiden Hauptpolen magnetische Flußdichten mit annähernd gleich großen Beträgen hervorgerufen werden. Dabei werden innerhalb jedes Informationsabschnittes quasi zwei Teilabschnitte entgegengesetzter Magnetisierungsrichtung geschrieben, die jeweils einem der Hauptpole zuzuordnen sind. Weitere Einzelheiten des Schreibverfahrens sind zwar in der Schrift nicht näher erläutert; man kann aber davon ausgehen, daß der nachlaufende Polschenkel die vom vorlaufenden Polschenkel geschriebenen Teilabschnitte überschreiben soll. Wegen der geringen Spaltweite sind jedoch die mit dem Magnetkopf zu erhaltenden Signale verhältnismäßig klein. Es ist nämlich nicht zu vermeiden, daß ein Teil des magnetischen Flusses direkt zwischen den beiden Polschenkelenden und nicht über die Speicherschicht des Aufzeichnungsmediums übertritt.

Aufgabe der vorliegenden Erfindung ist es, die Informationsspeichereinrichtung der eingangs genannten Art mit einem Magnetkopf mit hintereinanderliegenden Polen dahingehend zu verbessern, daß die erwähnten Probleme hinsichtlich der Führung des magnetischen Flusses verringert sind, so daß eine Schreib-/Lesefunktion mit hohem Wirkungsgrad zu realisieren ist.

Diese Aufgabe wird erfindungsgemäß mit den im kennzeichnenden zweiten Teil des Patentanspruches 1 aufgeführten Maßnahmen gelöst.

Da die von den beiden Polschenkeln gebildeten Pole als Hauptpole fungieren sollen, ist deren Polstärke zumindest annähernd gleich, d.h. sie führen den gleichen Magnetfluß. Da ferner auch die magnetischen Flußdichten dieser Pole zumindest weitgehend gleich sein sollen, weisen die Polschenkelenden dann etwa gleiche Flächen auf. Die Vorteile eines solchen Magnetkopfes sind insbesondere darin zu sehen, daß bei dem quasisymmetrischen Aufbau beide Polschenkel sowohl zum Lesen als auch zum Schreiben mit gutem Wirkungsgrad herangezogen werden. Hierbei entfällt der bei den bisher bekannten Lösungen vorgesehene Hilfspol, der ein unerwünschtes Lesen bzw. Schreiben an der ablaufenden Kante möglich machte.

Darüber hinaus wird auch eine optimierte Magnetflußführung auf verhältnismäßig einfache Weise ermöglicht. Diese Flußführung ist nämlich Teil des Speicherprinzips selbst, da der magnetische Fluß innerhalb eines Abschnittes in diesen hinein- und aus diesem herausgeführt wird. Jeder Abschnitt weist somit zwei Teilabschnitte auf, die zueinander engegengesetzt magnetisiert sind. Ohne Anwesenheit eines Kopfes schließt sich der magnetische Kreis durch einen definierten Streufluß oberhalb der Speicherschicht des Aufzeichnungsmediums. Bei Anwesenheit eines Kopfes wird der Fluß außerhalb dieses Mediums zumindest weitgehend über diesen Kopf geschlossen.

Im Gegensatz zum Aufbau des bekannten Magnetkopfes gemäß der US-A-4 277 809 sind die beiden Polschenkel des Magnetkopfes der erfindungsgemäßen Einrichtung durch einen verhältnismäßig weiten Luftspalt beabstandet. Folglich ist ein unmittelbarer Übertritt von magnetischem Fluß zwischen den Enden der Polschenkel erschwert. D.h., die Verluste an magnetischem Fluß sind dementsprechend gering.

Vorteilhafte Ausgestaltungen der Informationsspeichereinrichtung nach der Erfindung gehen aus den abhängigen Ansprüchen hervor.

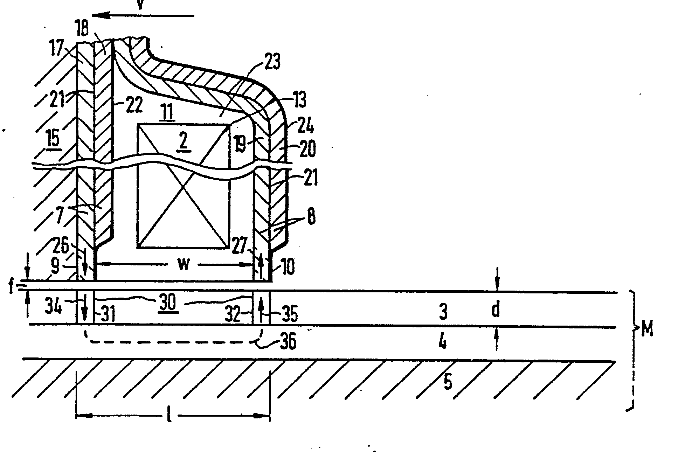

Bei dem in der Figur als Längsschnitt gezeigten, kombinierten Schreib- und Lese-Magnetkopf der Einrichtung nach der Erfindung wird von einem bekannten Kopf ausgegangen, wie er z.B. aus der genannten DE-A-2 924 013 zu entnehmen ist. Der in der Figur allgemein mit 2 bezeichnete Kopf, der beispielsweise während seiner Schreibfunktion gemäß dem Prinzip der senkrechten (vertikalen) Magnetisierung gezeigt ist, befindet sich an der Stirnseite oder auch auf der Rückseite eines gebräuchlichen, als Flugkörper bezeichneten Elementes, das in der Figur nicht näher ausgeführt ist. Er ist relativ zu einem an sich bekannten Aufzeichnungsmedium M in geringer Flughöhe f von beispielsweise 0,2 μm über diesem Medium zu führen. Z.B. wird das Aufzeichnungsmedium unter dem Magnetkopf hinweggeführt. Die relative Bewegungsrichtung des Magnetkopfes 2 bezüglich des Aufzeichnungsmediums M ist durch eine mit v bezeichnete gepfeilte Linie angedeutet. Das Aufzeichnungsmedium M, z.B. eine Magnetspeicherplatte, weist eine Speicherschicht 3 insbesondere aus einer CoCr-Legierung auf, welche eine vorbestimmte Dicke d hat. Diese Schicht kann gegebenenfalls auf ihrer dem Magnetkopf 2 abgewandten Seite mit einer weichmagnetischen Schicht 4, z.B. aus einer speziellen NiFe-Legierung, verbunden sein. Die Speicherschicht 3 und gegebenenfalls die Schicht 4 sind auf der oberen Flachseite eines Trägerkörpers 5 des Aufzeichnungsmediums M abgeschieden.

Der Magnetkopf 2 weist zwei Polschenkel 7 und 8 auf, die weitgehend und insbesondere an ihren dem Aufzeichnungsmedium M zugewandten Enden 9 bzw. 10 zumindest annähernd senkrecht zur Oberfläche des Aufzeichnungsmediums M ausgerichtet sind. Zwischen diesen Polschenkelenden ist ein Luftspalt 11 ausgebildet, in dem eine Spulenwicklung 13 untergebracht ist. Auf der dem Aufzeichnungsmedium M abgewandten Seite des Kopfes 2 sind die beiden Polschenkel 7 und 8 in bekannter Weise zusammengeführt.

Bei der Herstellung des Magnetkopfes 2 in Dünnschicht-Technik wird im allgemeinen ein Substrat 15 verwendet, das z.B. aus TiC und $Al_2O_3$ besteht. Falls erforderlich, kann das Substrat 15 mit einer hinreichend dicken Isolationsschicht z.B. aus $Al_2O_3$ versehen werden. Zum Aufbau der Polschenkel 7 und 8 werden dünne Magnetschichten 17 bis 20 aus speziellen NiFe-Legierungen wie Permalloy (Ni/Fe-81/19) oder aus FeB durch Sputtern, Aufdampfen oder galvanische Abscheidung aufgebracht und jeweils durch eine nicht-magnetische Zwischenlage 21 z.B. aus $SiO_2$ oder $Al_2O_3$ voneinander getrennt. Die Magnetisierung dieser Magnetschichten liegt dabei in der Schichtebene. Durch den Herstellungsprozeß bedingt weisen die Magnetschichten eine uniaxiale Anisotropie auf, d.h. daß jede Magnetschicht zwei um 90° gedrehte Anisotropieachsen aufweist, die als leichte oder schwere Richtung bezeichnet werden. Die Magnetisierung liegt bevorzugt parallel oder antiparallel zur leichten Richtung.

Die leichte Richtung der Magnetschichten kann z.B. beim Aufbringen der jeweiligen Schicht durch ein angelegtes Magnetfeld induziert werden.

Die aufgewachsenen, unterschiedlichen Schichten für den ersten Polschenkel 7, die in der Figur mit 17 und 18 bezeichnet sind, werden durch an sich bekannte Techniken wie Fotolithografie, Plasma, Ionenstrahl- oder naßchemisches Ätzen strukturiert und damit der erste Polschenkel 7 des Magnetkopfes 2 hergestellt. Die leichte Richtung der Magnetisierung liegt hierbei zumindest im Bereich seines Endes 9 im wesentlichen parallel zur Oberfläche des Aufzeichnungsmediums M. Nach Fertigstellung dieses Polschenkel 7 wird eine Isolationsschicht 22 z.B. aus $SiO_2$ oder $Al_2O_3$ aufgebracht und anschließend die zum Ein- und/ oder Auslesen der Daten in der Magnetspeicherschicht 3 des Aufzeichnungsmediums erforderliche Spulenwicklung 13 hergestellt und strukturiert. Diese Wicklung besteht z.B. aus Cu, Au oder Al.

Da unebene Magnetschichten eine Verschlechterung ihrer magnetischen Eigenschaften bewirken, kann gegebenenfalls die Spulenwicklung 13 in bekannter Weise mittels eines Polyimid-Lackes 23 eingeebnet werden. Daran anschließend erfolgt das Aufbringen und Strukturieren des zweiten Polschenkels 8 mit seinen Schichten 19 und 20 aus der speziellen NiFe-Legierung. Schließlich wird zum Schutz des Dünnschicht-Magnetkopfes 2 noch eine verhältnismäßig dicke Protektionsschicht 24 z.B. aus $Al_2O_3$ aufgebracht.

Statt des Polyimid-Lackes 23 zwischen den beiden Polschenkeln 7 und 8 kann vorteilhaft auch eine Füllung aus $Al_2O_3$ vorgesehen werden. Mit dieser Füllung lassen sich zum einen die Spulenwicklung 13 und die Polschenkel 7 und 8 elektrisch isolieren und kann die Welligkeit der Spulenwicklung geglättet werden. Zum anderen sind mit einer Füllung aus diesem verhältnismäßig harten Material Auswaschungen zu verhindern, die zum Absturz des über dem Aufzeichnungsmedium M mit der äußerst geringen Höhe f hinwegfliegenden Magnetkopfes 2 durch sich einlagernde Schmutzpartikel führen können.

Mit dem in der Figur gezeigten Magnetkopf 2 wird beispielsweise gerade eine Schreibfunktion ausgeübt. Hierzu wird die Spulenwicklung 13 so erregt, daß die magnetischen Flüsse in den Polschenkeln 7 und 8 im wesentlichen antiparallel verlaufen. An den beiden Enden 9 und 10 dieser Polschenkel tritt also auf Grund der durch gepfeilte Linien 26 und 27 veranschaulichten magnetischen Flüsse bzw. Magnetisierungen jeweils ein Magnetfeld mit einer ausgeprägt senkrechten (vertikalen) Komponente aus, mit dem durch entsprechende Magnetisierung der Speicherschicht 3 des Aufzeichnungsmediums M eine entsprechende Information geschrieben wird. Dabei ist an den Enden 9 und 10 die Polstärke vorteilhaft etwa gleich; d.h., es herrscht dort der etwa gleiche Magnetfluß. Auch die magnetischen Flußdichten an den Polschenkelenden sollen zumindest weitgehend vom Betrag her gleich groß sein, so daß die Polschenkelenden dann etwa gleiche Querschnittsflächen aufweisen.

Auf Grund der erfindungsgemäßen Ausgestaltung des Magnetkopfes 2 mit zwei gleichberechtigten Hauptpolen bzw. Polschenkelenden 9 und 10 werden pro Information also in jedem mit 30 bezeichneten Speicherabschnitt der Speicherschicht 3 zwei Teilabschnitte 31 und 32 beschrieben. Diese Teilabschnitte liegen in Bewegungsrichtung gesehen in derselben Spur um einen der Weite w zwischen den beiden Polschenkelenden 9 und 10 entsprechenden Abstand auseinander und sind zueinander entgegengesetzt magnetisiert. Die antiparallele Magnetisierung dieser Teilabschnitte ist in der Figur durch gepfeilte Linien 34 und 35 angedeutet.

Dabei wird, wie durch eine gestrichelte Linie 36 veranschaulicht sein soll, die Magnetisierung in jedem Speicherabschnitt 30 auf der Rückseite der Speicherschicht 3 geschlossen. Zur Schließung der Magnetisierung auf dieser Rückseite kann vorteilhaft die dort vorzusehende Schicht 4 aus weichmagnetischem Material dienen.

Um mit dem Magnetkopf 2 ein einwandfreies Herauslesen der einzuspeichernden Informationen zu ermöglichen, bedarf es einer besonderen Codierung bzw. Taktung, um ein Überschreiben der von dem in Bewegungsrichtung gesehen vorderen Polschenkel 7 beschriebenen Teilabschnitte 31 durch den nachfolgenden Polschenkel 8 zu vermeiden. Dies läßt sich ohne weiteres durch jeweiliges Überspringen von Spurlängen 1 mit der Entfernung zwischen den äußeren Kanten der Polschenkelenden 9 und 10 entsprechender Größe gewährleisten. Die damit verbundene Halbierung der Bitdichte innerhalb einer Spur bei festgelegter Bitlänge kann z.B. durch Halbierung der Zeilenbreite bei gleichbleibendem magnetisierten Volumen eines Bits auf der Magnetspeicherplatte ausgeglichen werden. Hierbei ist gegenüber den vorbekannten Magnetköpfen ein höheres Signal-Rausch-Verhältnis auf Grund der optimierten Magnetflußführung gewährleistet. Sollte die Verringerung der Zeilenbreite zu einer unerwünschten Formanisotropie in den Magnetschichten der Polschenkel führen, so daß die Magnetisierung parallel bzw. antiparallel zur schweren Richtung ausgerichtet wird, so lassen sich vorteilhaft Magnetpole aus Doppelschichten verwenden.

**Patentansprüche**

1. Einrichtung zur Speicherung von Informationen
- mit einem Aufzeichnungsmedium (M), das mit mindestens einer magnetisierbaren Speicherschicht (3) versehen ist, welche ein magnetisch anisotropes Material enthält, dessen Achse leichter Magnetisierung im wesentlichen senkrecht zur Oberfläche des Mediums (M) ausgerichtet ist,
- mit einem über dem Aufzeichnungsmedium (M) zu führenden Magnetkopf (2),
  mit dem in das Aufzeichnungsmedium (M) längs einer Spur vorbestimmter Breite die Informationen in aufeinanderfolgenden Abschnitten (30) vorbestimmter Ausdehnung in Längsrichtung der Spur durch senkrechte Magnetisierung der Speicherschicht (3) einzuschreiben sind, und der einen den magnetischen Fluß führenden Leitkörper mit dem Aufzeichnungsmedium (M) zugewandten Enden (9, 10) zweier Polschenkel (7, 8) aufweist, wobei die Polschenkelenden (9, 10) in Bewegungsrichtung des Kopfes (2) gesehen hintereinander und mit vorbestimmtem Abstand (w) zueinander angeordnet sind und gleichberechtigte Hauptpole mit entgegengesetzten Polaritäten bilden, sowie

– mit einer Ansteuerschaltung für mindestens eine sich durch den zwischen den Polschenkeln (7, 8) ausgebildeten Luftspalt (11) erstreckende Spulenwicklung (13), welche für die Schreibfunktion derart zu erregen ist, daß die magnetischen Flußdichten der beiden Hauptpole zumindest annähernd gleiche Beträge haben, dadurch gekennzeichnet, daß die Polschenkelenden (9, 10) so weit beabstandet sind, daß für die Schreibfunktion innerhalb jedes Abschnittes (30) der Spur zwei getrennte Teilabschnitte (31, 32) auszubilden sind, die jeweils einem der Hauptpole zuzuordnen sind und daß zwischen jeweils zwei mit den beiden Hauptpolen gleichzeitig geschriebenen Teilabschnitten (31, 32) mindestens ein weiterer Teilabschnitt zu schreiben ist, und daß mittels der Ansteuerschaltung eine codierte Schreibfunktion sowie eine entsprechende Lesefunktion derart auszuüben sind, daß ein Überspringen von mit den Hauptpolen bereits geschriebenen bzw. ausgelesenen Teilabschnitten (31, 32) erfolgt.

2. Einrichtung nach Anspruch 1, dadurch gekennzeichnet, daß die beiden Polschenkel (7, 8) an ihren dem Aufzeichnungsmedium (M) zugewandten Enden (9, 10) zumindest annähernd gleiche Flächen aufweisen.

3. Einrichtung nach Anspruch 1 oder 2, dadurch gekennzeichnet, daß die den Magnetfluß führenden Teile (Polschenkel 7, 8) des Magnetkopfes (2) zumindest teilweise als Dünnschicht-Strukturen (Schichten 17 bis 20) auf einem ebenen Substratkörper (15) abgeschieden sind.

4. Einrichtung nach einem der Ansprüche 1 oder 3, dadurch gekennzeichnet, daß die den Magnetfluß führenden Teile (Polschenkel 7, 8) des Magnetkopfes (2) zumindest teilweise aus weichmagnetischem Material bestehen.

5. Einrichtung nach einem der Ansprüche 1 oder 4, dadurch gekennzeichnet, daß die den Magnetfluß führenden Teile (Polschenkel 7, 8) des Magnetkopfes (2) aus einem Material bestehen, dessen leichte Magnetisierung zumindest weitgehend senkrecht zur Führungsrichtung des Magnetflusses gerichtet ist.

6. Einrichtung nach Anspruch 3, dadurch gekennzeichnet, daß der Substratkörper (15) aus TiC und $Al_2O_3$ besteht.

7. Einrichtung nach Anspruch 3, dadurch gekennzeichnet, daß die Polschenkel (7, 8) aus einzelnen Schichten (17 bis 20) bestehen, die durch nichtmagnetische Zwischenlagen (21) voneinander getrennt sind.

8. Einrichtung nach einem der Ansprüche 1 oder 7, dadurch gekennzeichnet, daß die Spulenwicklung (13) zumindest teilweise in einem zwischen den Polschenkeln (7, 8) ausgebildeten Zwischenraum (11) angeordnet ist.

9. Einrichtung nach Anspruch 8, dadurch gekennzeichnet, daß in dem Zwischenraum (11) die Spulenwicklung (13) in einem isolierenden Material eingebettet ist.

10. Einrichtung nach Anspruch 9, dadurch gekennzeichnet, daß die Spulenwicklung (13) mittels eines Lackes (23) in dem Zwischenraum (11) eingebettet ist.

11. Einrichtung nach Anspruch 9, dadurch gekennzeichnet, daß als isolierendes Material eine $Al_2O_3$-Füllung vorgesehen ist.

12. Einrichtung nach einem der Ansprüche 1 bis 11, dadurch gekennzeichnet, daß die Spulenwicklung (13) als Dünnschicht-Struktur ausgebildet ist.

13. Einrichtung nach einem der Ansprüche 1 bis 12, gekennzeichnet durch Polschenkel (7, 8) des Magnetkopfes (2), die zumindest an ihren dem Aufzeichnungsmedium (M) zugewandten Enden (9, 10) aus mehreren Schichten bestehen.

**Claims**

1. Device for storing information
– having a recording medium (M) which is provided with at least one magnetizable storage layer (3), which contains a magnetically anisotropic material, the axis of easy magnetization of which is aligned so that is substantially perpendicular to the surface of the medium (M),
– having a magnetic head (2) which is to be guided above the recording medium (M), with which head the information is to be written into the recording medium (M) along a track of predetermined width, in successive sections (30) of predetermined extent in the longitudinal direction of the track through perpendicular magnetization of the storage layer (3) and which has a guide body, conducting the magnetic flux, with ends (9, 10) of two pole shanks (7, 8) facing the recording medium (M), the pole shank ends (9, 10) being arranged, viewed in the direction of movement of the head (2), one after the other and with a predetermined distance (w) between them and forming equally enabled main poles with opposite polarities, and also
– having a control circuit for at least one coil winding (13) which extends through the air gap (11) formed between the pole shanks (7, 8) and which can be excited for the write function in such a way that the magnetic flux densities of the two main poles have at least approximately the same magnitudes, characterised, in that the pole shank ends (9, 10) are at such a distance from each other that there are to be formed for the write function within each section (30) of the track two separate partial sections (31, 32), each of which are to be assigned to one of the main poles and in that at least one further partial section is to be written between, in each case, two partial sections (31, 32) simultaneously written with the two main poles, and in that a coded write function and also a corres- ponding read function can be performed by means of the control circuit such that there results a skip of partial sections (31, 32) already written or read out with the main poles.

2. Device according to claim 1, characterised in that the two pole shanks (7, 8) have at least substantially equal surface areas at their ends (9, 10) facing the recording medium (M).

3. Device according to claim 1 or 2, characterised in that the parts (pole shanks 7, 8) of the magnetic head (2) conducting the magnetic flux are deposited at least in part as thin layer structures (layers 17 to 20) on a planar substrate body (15).

4. Device according to one of the claims 1 or 3, characterised in that the parts (pole shanks 7, 8) of the magnetic head (2) conducting the magnetic flux consist at least in part of soft magnetic material.

5. Device according to one of the claims 1 or 4, characterised in that the parts (pole shanks 7, 8) of the magnetic head (2) conducting the magnetic flux consist of a material, the easy magnetization of which is directed at least substantially perpendicular to the conducting direction of the magnetic flux.

6. Device according to claim 3, characterised in that the substrate body (15) consists of TiC and $Al_2O_3$.

7. Device according to claim 3, characterised in that the pole shanks (7, 8) consist of single layers (17 to 20) which are separated from each other by non-magnetic intermediate layers (21).

8. Device according to one of the claims 1 or 7, characterised in that the coil winding (13) is arranged at least in part in an intermadiate space (11) formed between the pole shanks (7, 8).

9. Device according to claim 8, characterised in that the coil winding (13) is embedded in an insulating material in the intermediate space (11).

10. Device according to claim 9, characterised in that the coil winding (13) is embedded in the intermediate space (11) by means of a lacquer (23).

11. Device according to claim 9, characterised in that an $Al_2O_3$ filling is provided as insulating material.

12. Device according to one of the claims 1 to 11, characterised in that the coil winding (13) is formed as a thin layer structure.

13. Device according to one of the claims 1 to 12, characterised by pole shanks (7, 8) of the magnetic head (2) which consist, at least at their ends (9, 10) facing the recording medium (M), of several layers.

### Revendications

1. Dispositif pour mémoriser des informations, comprenant
– un milieu d'enregistrement (M), qui est pourvu d'au moins une couche-mémoire (3) magnétisable contenant un matériau magnétiquement anisotrope dont l'axe de la magnétisation facile est essentiellement perpendiculaire à la surface du milieu (M),
– une tête magnétique (2) à guider au-dessus du milieu d'enregistrement (M), au moyen de laquelle les informations sont à inscrire dans le milieu d'enregistrement (M) le long d'une piste de largeur prédéterminée, dans des sections (30) successives ayant une extension prédéterminée dans la direction longitudinale de la piste, par une magnétisation perpendiculaire de la couche-mémoire (3), et qui présente un corps conducteur guidant le flux magnétique et possédant des extrémités (9, 10), dirigées vers le milieu d'enregistrement (M), de deux branches polaires (7, 8), les extrémités (9, 10) des branches polaires étant disposées l'une derrière l'autre dans la direction de mouvement de la tête (2) et à une distance (w) préfixée l'une de l'autre, et formant des pôles principaux d'égale habilitation et de polarités contraires, ainsi que
– un circuit de commande pour au moins un enroulement de bobine (13) s'étendant à travers l'entrefer (11) formé entre les branches polaires (7, 8), enroulement qui, pour la fonction d'écriture, est à exciter de manière que les densités de flux magnétique des deux pôles principaux présentent au moins approximativement des valeurs égales, caractérisé en ce que les extrémités (9, 10) des branches polaires sont situées à une telle distance l'une de l'autre que pour la fonction d'écriture, deux sections partielles (31, 32) séparées doivent être formées à l'intérieur de chaque section (30) de la piste, chacune de ces sections partielles étant à associer à l'un des pôles principaux, et qu'au moins une section partielle supplémentaire doit être inscrite entre chaque fois deux sections partielles (31, 32) inscrites simultanément par les deux pôles principaux, et que, au moyen du circuit de commande une fonction d'écriture codée et une fonction de lecture correspondante sont à réaliser de manière que les sections partielles (31, 32) déjà inscrites ou lues par les pôles principaux soient sautées.

2. Dispositif selon la revendication 1, caractérisé en ce que les deux branches polaires (7, 8) présentent des aires au moins approximativement égales à leurs extrémités (9, 10) dirigées vers le milieu d'enregistrement (M).

3. Dispositif selon là revendication 1 ou 2, caractérisé en ce que les parties (branches polaires 7, 8) guidant le flux magnétique de la tête magnétique (2) sont déposées, au moins en partie, comme des structures à couche mince (couches 17 à 20) sur un corps de substrat (15) plan.

4. Dispositif selon l'une des revendications 1 ou 3, caractérisé en ce que les parties (branches polaires 7, 8) de la tête magnétique (2) guidant le flux magnétique sont formées, au moins en partie, avec un matériau magnétique doux.

5. Dispositif selon l'une des revendications 1 ou 4, caractérisé en ce que les parties (branches polaires 7, 8) de la tête magnétique (2) guidant le flux magnétique, sont formées avec un matériau dont la direction de magnétisation facile est, tout au moins dans une large mesure, perpendiculaire à la direction de guidage du flux magnétique.

6. Dispositif selon la revendication 3, caractérisé en ce que le corps de substrat (15) est en TiC et $Al_2O_3$.

7. Dispositif selon la revendication 3, caractérisé en ce que les branches polaires (7, 8) sont formées de couches individuelles (17 à 20) qui sont séparées l'une de l'autre par des couches intermédiaires (21) amagnétiques.

8. Dispositif selon l'une des revendications 1 ou 7, caractérisé en ce que l'enroulement de bobine (13) est disposé, au moins partiellement, dans un espace intermédiaire (11) formé entre les branches polaires (7, 8).

9. Dispositif selon la revendication 8, caractérisé en ce que l'enroulement de bobine (13) est noyé dans un matériau isolant dans l'espace intermédiaire (11).

10. Dispositif selon la revendication 9, caractérisé en ce que l'enroulement de bobine (13) est noyé au moyen d'un vernis (23) dans l'espace intermédiaire (11).

11. Dispositif selon la revendication 9, caractérisé en ce que le matériau isolant est un remplissage en $Al_2O_3$.

12. Dispositif selon l'une des revendications 1 à 11, caractérisé en ce que l'enroulement de bobine (13) est réalisé comme une structure à couche mince.

13. Dispositif selon l'une des revendications 1 à 12, caractérisé par des branches polaires (7, 8) de la tête magnétique (2), dont au moins les extrémités (9, 10) dirigées vers le milieu d'enregistrement (M), sont formées de plusieurs couches.